# EUROPÄISCHE PATENTSCHRIFT

(11) **EP 0 658 780 B1**
(45) Veröffentlichungstag und Bekanntmachung des Hinweises auf die Patenterteilung: **03.07.2002**
(21) Anmeldenummer: 94118755.1
(22) Anmeldetag: 29.11.1994
(51) Int. Cl.: G02B 5/00, F21V 11/02

(54) **Richtblende für Beleuchtungskörper und Verfahren zu deren Herstellung**
Directional filter for lighting fixture and method of manufacture
Filtre directionnel pour appareil d'éclairage et procédé de fabrication

(30) Priorität: 01.12.1993 CH 358493
(43) Veröffentlichungstag der Anmeldung: 21.06.1995
(73) Patentinhaber: Raimondi, Enrico, CH-8800 Thawil (CH); Raimondi-Staeuble, Olga, CH-8952 Schlieren (CH); Raimondi, Bruno, CH-8134 Adliswil (CH)
(72) Erfinder: Raimondi, Rinaldo, CH-8952 Schlieren (CH)
(74) Vertreter: Goddar, Heinz J., Dr.

(56) Entgegenhaltungen:
- EP-A- 0 122 830
- EP-A- 0 151 703
- EP-A- 0 354 672
- WO-A-84/04821
- WO-A-92/11549
- FR-A- 1 334 217
- FR-A- 2 454 114
- US-A- 1 654 874
- US-A- 2 212 793
- US-A- 2 258 354
- US-A- 2 467 096
- US-A- 3 894 228
- US-A- 4 630 181
- US-A- 4 989 952

## Beschreibung

Die Erfindung betrifft eine Richtblende nach der Einleitung des Patentanspruches 1 und ein Verfahren zu deren Herstellung.

Richtblenden sind seit langer Zeit gebräuchliche Hilfsmittel, Licht- und andere Strahlen zu kollimieren. Alle Richtblenden haben als Grundelemente Lamellen (L), welche parallel oder gitterförmig zusammengebaut werden. Es finden sich verschiedene Aufbauweisen, mit dem Ziel, bei möglichst geringem Strahlenverlust eine größtmögliche Kollimierung zu erhalten. Der Wirkungsgrad ist abhängig vom Verhältnis des Gesamtquerschnittes der Richtblende zur Summe der Flächen der Strahlenschächte.

Die Optimierung der Richtblenden traditioneller Bauweise findet ihre Grenzen in der Stabilität der Richtblende, die ein Minimum an Lamellendicke erfordert. Diese Nachteile werden durch Richtblenden beseitigt, bei denen der Raum zwischen den Lamellen (L) durch eine geeignete, licht- oder strahlendurchlässige Substanz gefüllt ist.

Richtblenden werden auf dem Gebiet der Beleuchtung einerseits dazu eingesetzt, das Licht in Richtung auf den Anwendungsbereich, zu kollimieren, andererseits um Blendwirkungen zu verhindern oder zu vermindern und schließlich um den direkten Blick auf die Lichtquelle zu verhindern, sei es zur Vermeidung der Blendung oder aus ästhetischen Gründen.

Richtblenden haben den Nachteil, daß sie zu einer Reduktion der Lichtausbeute der Lichtquelle führen.

Richtblenden, deren Zwischenräume zwischen den Lamellen (L) mit einer transparenten Substanz ausgefüllt sind, haben sich bisher im Beleuchtungssektor nicht durchgesetzt, weil auf den Lamellen (L) immer unerwünschte Spiegelungen (nicht-diffuse Reflexionen der Lichtquelle) auftreten und ferner ein Einblick zwischen den Lamellen (L) hindurch auf die Lichtquelle möglich ist.

Solchen Richtblenden sind aus den Druckschniften US 2258354, US 2212793, FR 1334217 und US 2467096 bekannt.

Ferner ist die Herstellung der Trägerkörper (T) durch Ausschneiden und Ausfräsen der Elemente aus Platten (z.B. Acrylglas-Platten) unwirtschaftlich, andererseits nicht sauber durchführbar. Diese Umstände vermindern den wirtschaftlichen Nutzen dieser Bauweise erheblich.

Ferner fehlen heute Möglichkeiten, das Licht in eine Richtung mehr zu streuen, als in die Gegenrichtung dazu, insbesondere bei der Verwendung von Leuchtstoffröhren als Lichtquelle, was für viele Anwendungen (z.B. zur optimalen Ausleuchtung von Arbeitsplätzen) wünschbar wäre. Ebenso kann die Färbung des Lichtes nur durch Filter und unter in Kaufnhame erheblicher Verluste erzielt werden.

Schließlich ist die indirekte Beleuchtung, d.h. die Beleuchtung mittels Reflexionen des Lichtes an der Decke, mit Leuchtstoffröhren als Lichtquelle, bis heute nicht sauber lösbar, einerseits wegen der heute üblichen niederen Räume, andererseits infolge des Schattenwurfes der für die Leuchtstoffröhren erforderlichen Armaturen.

Neben der Optimierung der Beleuchtung kann eine Richtblende, deren Zwischenräume durch transparentes Material gefüllt sind, auch dem Schutze der Lichtquelle, insbesondere gegen Feuchtigkeit und Schmutz, dienen. Diese Funktion wird um so besser erfüllt, je mehr die Richtblende die Lichtquelle umschließt.

Der Erfindung liegt die Aufgabe zugrunde, Richtblenden für Beleuchtungskörper zu schaffen, deren Lamellen (L) minimale Dicke aufweisen, die eine größtmögliche Lichtausbeute und einen optimalen Anteil an den erwünschten Farben haben und die von großer Stabilität sind, ohne daß dabei an den Lamellen (L) unerwünschte und störende Reflexe auftreten, unter optimaler Reduktion der seitlichen Einsicht auf die Lichtquelle. Dabei sollen auch Konstruktionsformen gefunden werden, die es erlauben, die Lichtquelle optimal zu umfassen. Dies würde erlauben, das Licht seitlich auf die Decke zu werfen und somit den Raum durch diffuses Licht zu beleuchten, sowie weitere Vorteile bei der Anwendung der Richtblende als Abdeckung oder Schutz der Strahlenquelle zu erzielen.

Ferner soll ein Verfahren gefunden werden, durch welches die Herstellung wirtschaftlich und im Ergebnis technisch und ästhetisch einwandfrei vorgenommen werden kann.

Erfindungsgemäß wird diese Aufgabe bei einer Richtblende der gattungsgemäßen Art durch die im Kennzeichen des Patentanspruches 1 genannten Merkmale gelöst.

Bevorzugte Ausführungsformen sind Gegenstand der Unteransprüche 2 bis 15.

Das erfindungsgemäße Verfahren ist Gegenstand der Unteransprüche 16 bis 21.

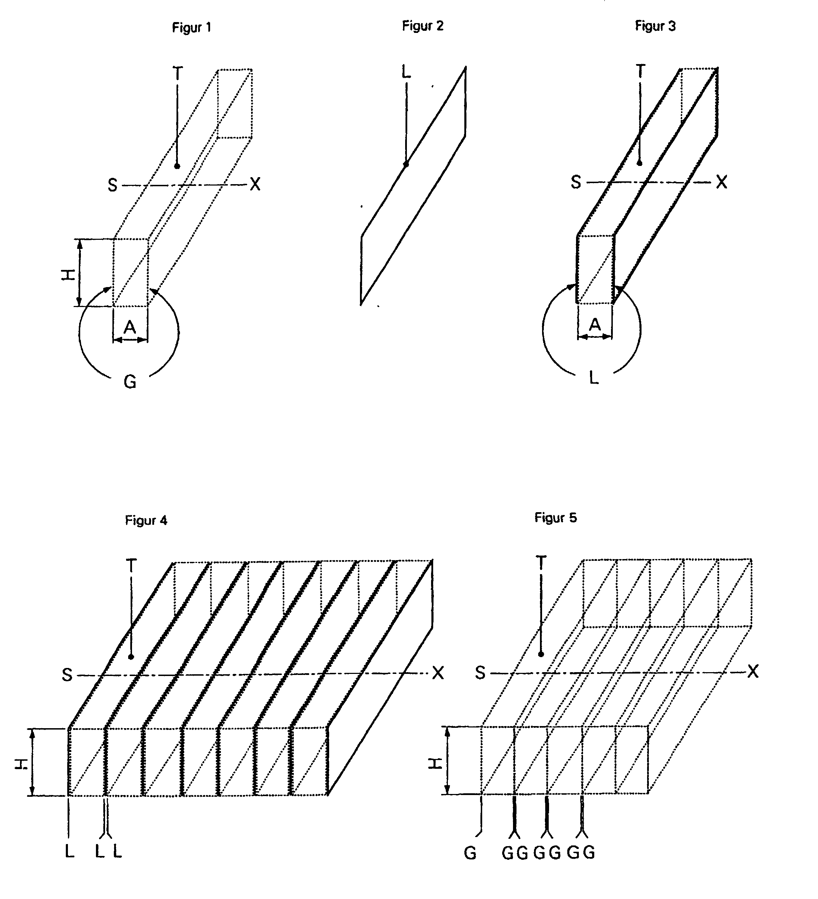

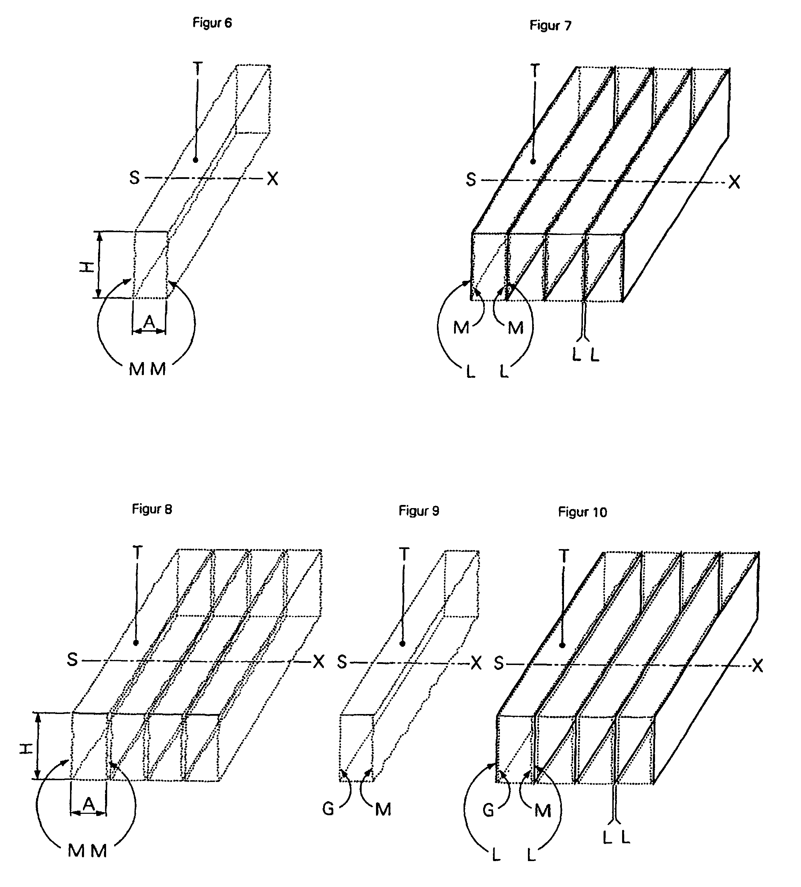

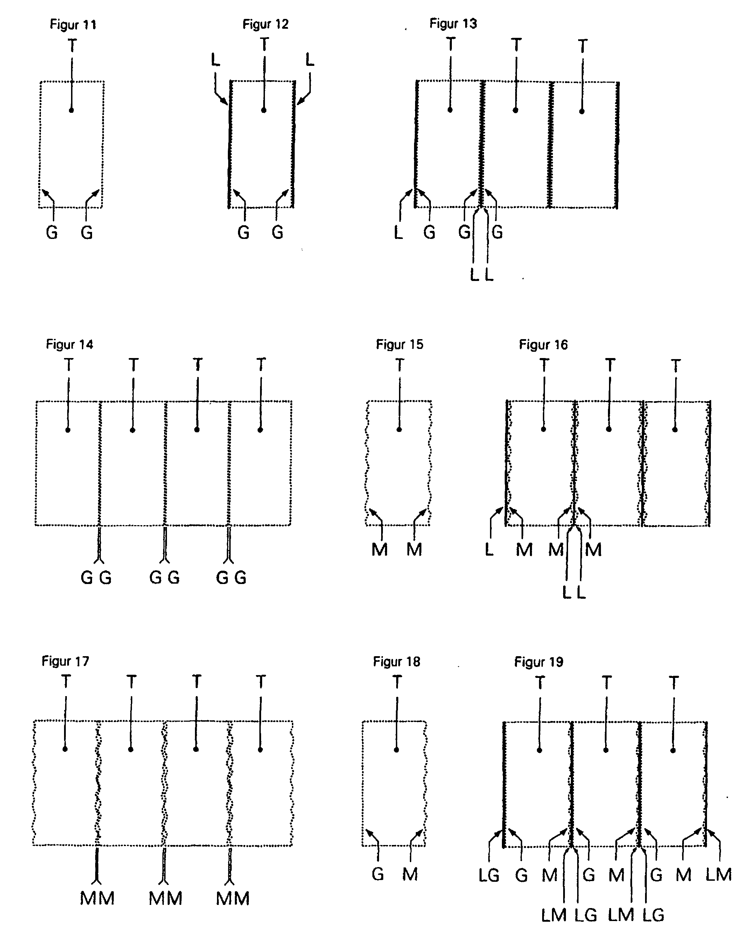

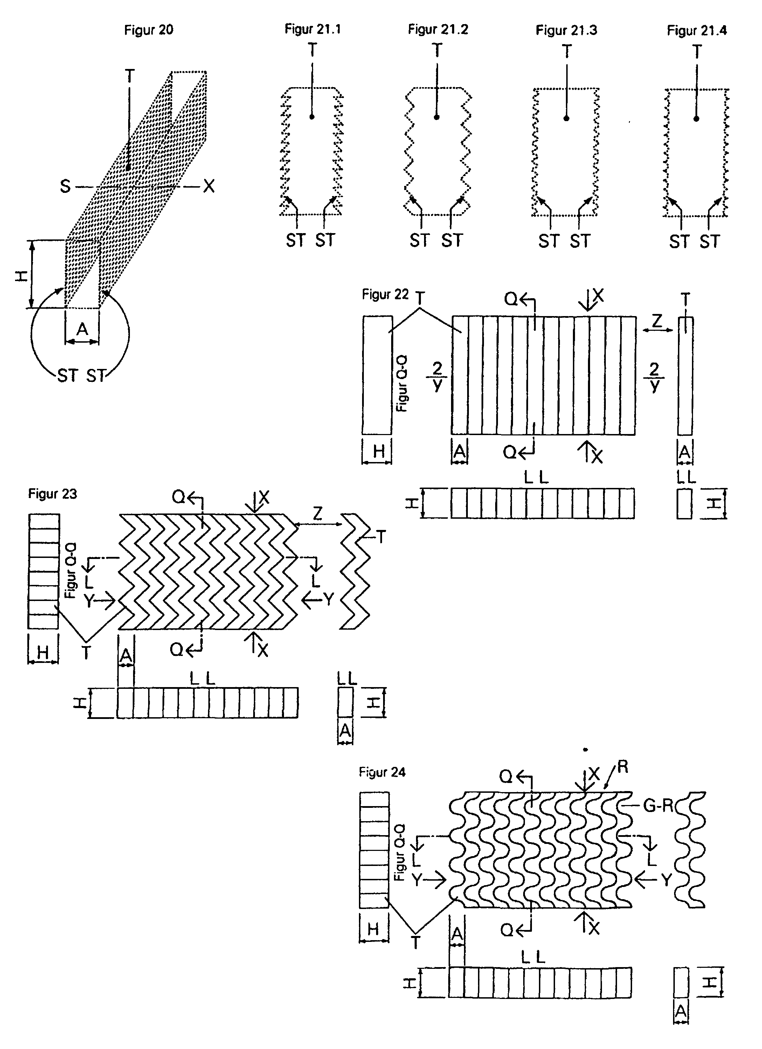

Figuren 1 bis 26 zeigen den Aufbau von Richtblenden.

Figur 27 zeigt eine erfindungsgemäße Richtblende.

Figuren 28 und 29 zeigen vergleichsweise eine Richtblende, die nicht Teil der Erfindung ist.

Die Zielsetzungen der Erfindung werden also erreicht durch eine Richtblende mit einer Mehrzahl von Lamellen (L), die zueinander parallele Lichtschächte haben, wobei die Zwischenräume durch einen Trägerkörper (T) gefüllt und die Lamellen (L) auf diesen aufgebracht sind. Das geeignete Material als Trägersubstanz für sehr dünne Lamellen (L) sind im Bereiche des Lichts, wegen der geringen Verluste, Acrylglas und andere Kunststoffe, sowie spezielle Glasarten.

Erfindungsgemäss wird dabei der Umstand ausgenutzt, dass das Licht, beim Auftreffen auf die Oberfläche des Trägerkörpers (T), gegen die Senkrechte zur Oberfläche hin gebrochen wird und somit mehr Lichtstrahlen den Raum zwischen den Lamellen (L) der Richtblende durchlaufen ohne auf diese aufzutreffen. Damit wird die Lichtausbeute erhöht.

Erfindungsgemäss wird der unerwünschte Spiegelungseffekt dadurch vermieden, dass die Oberfläche des Trägerkörpers (T) vorgängig chemisch oder mechanisch aufgerauht wird, oder das Trägermaterial mit aufgerauhter Oberfläche hergestellt wird. Damit wird eine stark diffundierende Wirkung erzielt. Die Herstellung von aufgerauhten Kunststoff- oder Glasträgerkörpern erfolgt, in dem die Guss- oder Spritzformen für die Platten oder Körper, die aus Glas, Metall, usw. hergestellt werden, vorgängig aufgerauht werden. Unter Aufrauhen oder Mattieren wird die Anbringung einer zufälligen Struktur, wie sie z.B. durch Sandstrahlen entsteht, verstanden.

Erfindungsgemäss können anstelle zufälliger auch regelmässige oder geplante Strukturen verwendet werden um die Reflexionsverhältnisse zu beeinflussen.

Erfindungsgemäss können die Lamellen (L) nach der Strukturierung der Oberfläche der Trägersubstanz durch verschiedene Verfahren aufgebracht werden, insbesondere durch Pinsel oder Rolle, durch Aufspritzen oder Aufdampfen, photographisch oder durch Bedrucken. Als Lamellenstoffe eignen sich hauptsächlich Farben, aber auch Metalle oder Kunststoffe, insbesondere geeignete Leimarten. Die Trägerkörper werden anschliessend zusammengefügt und verbunden, sodass in der Regel auf der Oberfläche eines Trägerkörpers eine Hälfte einer Lamelle aufgebracht wird.

Erfindungsgemäss werden die Lamellenhälften für die Erzeugung von Mischfarben im passierenden Licht verschieden eingefärbt, um die erwünschte Farbmischung zu erhalten.

Erfindungsgemäss kann die diffuse Wirkung der strukturierten Oberfläche durch absorbierende Materialien oder Farben weiter erhöht und die diffuse Reflexion auf ein Minimum beschränkt werden.

Erfindungsgemäss kann aber anderseits auch die Spiegelung von Lamellen (L) auf Trägerkörpern (T) gezielt dadurch erhöht werden, dass stark reflektierende Materialien für die Auftragung der Lamellen (L) auf einen möglichst glatten Trägerkörper (T) verwendet werden. Solche Materialien können metallisierte Farben oder aufgedampfte Metalle, aber auch Folien oder ähnliches sein.

Da jede Lamelle aus zwei Seiten zusammengesetzt wird, die je auf einem benachbarten Trägerkörper (T) aufgetragen ist, kann erfindungsgemäss die unterschiedliche Lichtausbeute in einer bestimmten Richtung dadurch erreicht werden, dass spiegelnde oder diffusreflektierende Lamellenseiten einerseits und absorbierende Lamellenseiten anderseits so kombiniert werden, dass die Strahlung gezielt in eine bestimmte Richtung geworfen wird.

Erfindungsgemäss wird die seitliche Einsicht dadurch erheblich vermindert, dass die Flächen der Trägerkörper (T) geformt werden, sei es gewellt oder gewinkelt (gezackt), wodurch auch die darauf aufzutragenden Lamellen (L) diese Form erhalten.

Erfindungsgemäss kann anstelle der Auftragung einer Lamelle auf zwei benachbarten Trägerkörpern (T) auch ein ganz feiner Luftspalt zwischen den Trägerkörpern (T) treten.

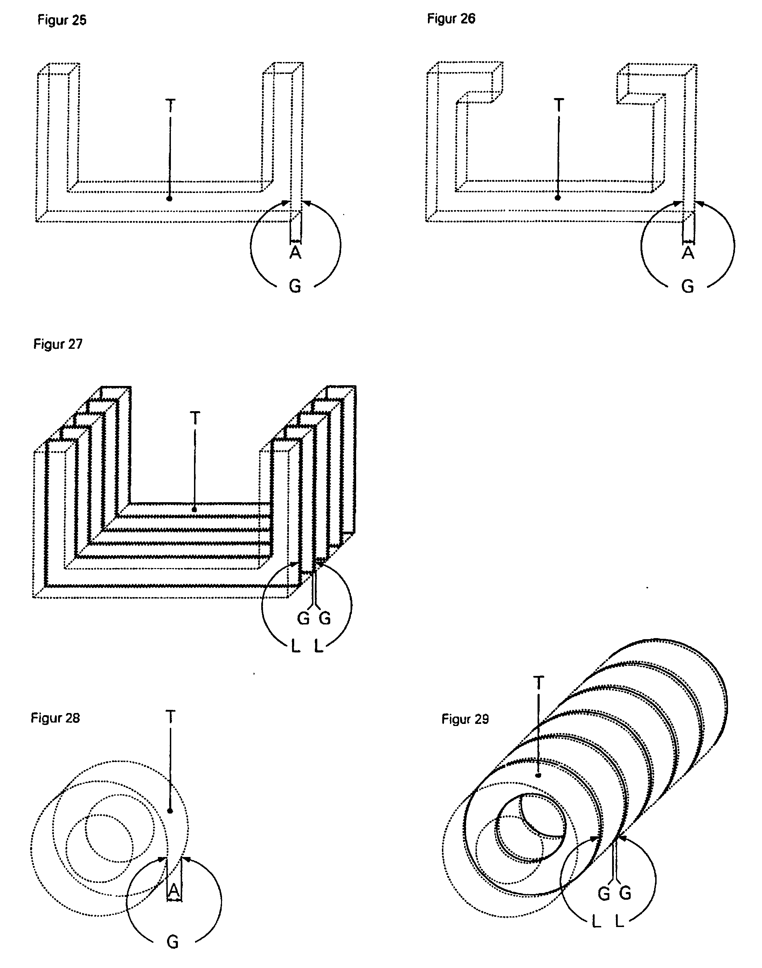

Erfindungsgemäss kann mit einer Richtblende, die die Lichtquelle möglichst weitgehend umfasst, das Licht seitlich an die Decke geworfen werden, wo es reflektiert wird und in stark diffuser und als angenehm empfundener Form den Raum beleuchtet. Erfindungsgemäss werden hier U-förmige Trägerkörper (T, Fig. 25 und 26), die in Längsrichtung einer Leuchtstoffröhre zusammengesetzt werden Anwendung finden.

Erfindungsgemäss wird eine Richtblende, die der Lichtquelle optimalen Schutz vor Umwelteinflüssen gewährt aus Trägerkörpern (T) zusammengestellt, die U-förmig sind, oder die U-förmig sind und an der oberen, offenen Seite zusätzliche Ansätze nach innen aufweisen. Die Lamellen (L) werden wiederum auf diesen Trägerkörpern (T) angebracht, bevor diese zusammengefügt werden.

## Patentansprüche

1. Richtblende mit einer Mehrzahl von Lamellen (L), die zueinander parallele Strahlenschächte bilden, sowie mit transparenten Trägerkörpern (T), welche die Zwischenräume zwischen den Lamellen (L) ausfüllen, **dadurch gekennzeichnet, daß** sie aus U-förmigen Trägerkörpern (T) aufgebaut ist, wobei die Außenseiten dieser Trägerkörper (T) Lichtaustrittsflächen der Richtblende bilden und die Trägerkörper (T) mit den zwischen ihnen befindlichen Lamellen (L) derart zusammenwirken, daß das Licht, welches aus dem von den Trägerkörpern (T) umschlossenen Bereich auf die Trägerkörper (T) einfällt, aufgrund des Brechungsindex der Trägerkörper (T) beim Eintritt in diese zur Senkrechten zu der Einfallsfläche hin gebrochen wird und sowohl im Bereich der Basis als auch im Bereich der Schenkel der U-förmigen Trägerkörper (T) beim Durchtritt durch die Trägerkörper (T) nach außen zu der besagten Lichtaustrittsfläche hin kollimiert wird, und daß die einzelnen Lamellen auf jeder Seite eine andere Farbe oder andere Farben aufweisen.

2. Richtblende nach Anspruch 1, **dadurch gekennzeichnet, daß** das Material der Lamellen (L) absorbierende Wirkung aufweist und dadurch die Reflexion von Licht vermindert.

3. Richtblende nach Anspruch 1, **dadurch gekennzeichnet, daß** die Lamellen (L) aus stark reflektierendem Material, insbesondere aus metallisierten Farben oder aufgedampftem Metall hergestellt sind, das auf eine glatte oder polierte Verbund-Oberfläche (G) der Trägerkörper (T) aufgetragen wird.

4. Richtblende nach einem der vorangehenden Ansprüche, **dadurch gekennzeichnet, daß** die einzelnen Lamellen (L) auf jeder Seite eine andere Reflexions- und/oder Absorptionseigenschaft aufweisen und diese daher geeignet ist, das Licht in eine gewünschte Richtung zu lenken.

5. Richtblende nach den Ansprüchen 4 und 5, **dadurch gekennzeichnet, daß** die Richtblende so konstruiert ist, daß sie durch den Anwender gedreht und das ausfallende Licht damit in die gewünschte Richtung geworfen werden kann.

6. Richtblende nach einem der vorangehenden Ansprüche, **dadurch gekennzeichnet, daß** die Flächen der einzelnen Lamellen (L) wellenförmig (Fig. 24) oder gewinkelt (Fig. 23) geformt sind und damit den seitlichen Einblick durch die Richtblende verwehren.

7. Richtblende nach einem der Ansprüche 1 bis 6, **dadurch gekennzeichnet, daß** die U-förmigen Trägerkörper (T, Fig. 25) eine von ihnen umschlossene Lichtquelle vor Umwelteinflüssen schützen.

8. Richtblende nach Anspruch 7, **dadurch gekennzeichnet, daß** die Trägerkörper (T), die durch ihre U-förmige Ausgestaltung die Lichtquelle umfassen und schützen, durch einen Kragen am oberen Ende der U-Form ergänzt werden, der in die U-Öffnung hineinragt, wodurch die Lichtquelle noch mehr umfaßt wird (Fig. 26).

9. Richtblende nach einem der vorangehenden Ansprüche, **dadurch gekennzeichnet, daß** die Oberflächen der Trägerkörper (T) regelmäßig strukturiert sind, wodurch dem diffusen Licht eine Charakteristik mit einem Glanz verliehen wird (Fig. 20 und 21).

10. Richtblende nach einem der vorangehenden Ansprüche, **dadurch gekennzeichnet, daß** für die Bildung der Lamellen (L) dünne Folien eingelegt werden.

11. Richtblende nach einem der vorangehenden Ansprüche, **dadurch gekennzeichnet, daß** die Trägerkörper (T, Fig. 1, 6, 9, 21 und 25) aus Acryl hergestellt sind.

12. Richtblende nach einem der Ansprüche 1 bis 10, **dadurch gekennzeichnet, daß** die Trägerkörper (T, Fig. 1, 6, 9, 21 und 25) aus Glas hergestellt sind.

13. Richtblende nach einem der Ansprüche 1 bis 11, **dadurch gekennzeichnet, daß** die Trägerkörper (T, Fig. 1, 6, 9, 21 und 25) durch ein Spritzgußverfahren herstellbar sind.

14. Richtblende nach einem der vorangehenden Ansprüche, **dadurch gekennzeichnet, daß** absorbierende oder reflektierende Farbstoffe, die auf dem Trägerkörper (T) die Lamellen (L) bilden, dem zur Verbindung der Trägerkörper (T) verwendeten Leim oder Klebstoff zugegeben sind.

15. Richtblende nach einem der vorangehenden Ansprüche, **dadurch gekennzeichnet, daß** für die Bildung der Lamellen (L) lediglich die unterschiedlichen Brechungsindices zwischen dem Trägerkörper (T) und der in einem schmalen Schlitz enthaltenen Luft verwendet sind (Fig. 5 und 8).

16. Verfahren zur Herstellung einer Richtblende nach einem der vorangehenden Ansprüche, **dadurch gekennzeichnet, daß** die Trägerkörper (T, Fig. 6) nach ihrer Herstellung an der Verbund-Oberfläche (G) aufgerauht werden oder mit rauher Verbund-Oberfläche (G) hergestellt und die Lamellen (L, Fig. 7) sodann auf diese Verbund-Oberflächen (G) aufgetragen und diese Elemente daraufhin miteinander verbunden werden (Fig. 7).

17. Verfahren nach Anspruch 16, **dadurch gekennzeichnet, daß** die Trägerkörper (T) nach ihrer Herstellung mechanisch aufgerauht werden.

18. Verfahren nach Anspruch 16, **dadurch gekennzeichnet, daß** die Trägerkörper (T) nach ihrer Herstellung chemisch aufgerauht werden

19. Verfahren nach Anspruch 16, **dadurch gekennzeichnet, daß** die Gußform für die Herstellung des Trägerkörpers (T) aufgerauht wird und die darin gegossenen Trägerkörper (T) daher eine rauhe Verbund-Oberfläche (M) haben.

20. Verfahren zum Herstellen einer Richtblende nach einem der Ansprüche 1 bis 15, insbesondere nach einem der Ansprüche 17 bis 19, **dadurch gekennzeichnet, daß** die Trägerkörper (T) im Stranggußverfahren hergestellt, zusammengeführt, verbunden und anschließend auf die entsprechende Breite oder Länge, senkrecht zur Ebene der Lamellen zugeschnitten werden.

21. Verwendung einer Richtblende nach einem der Ansprüche 1 bis 15 zum Schutz einer Lichtquelle vor Umwelteinflüssen.

## Claims

1. A directional filter comprising a plurality of lamellae (L), which form ray shafts parallel to one another, and comprising transparent support members (T) which fill the gaps between the lamellae (L), **characterised in that** it is constructed from U-shaped support members (T), the outsides of said support members (T) forming light exit surfaces of the directional filter and the support members (T) so cooperating with the lamellae (L) disposed between them that the light incident on the support members (T) from the zone enclosed by the support members (T) is refracted towards the perpendicular to the incident surface, because of the refractive index of the support members (T), on entry into the latter, and on passage through the support members (T) is collimated outwards towards the said light exit surface, both in the zone of the base and in the zone of the limbs of the U-shaped support members (T), and **in that** the individual lamellae have a different colour or different colours on each side.

2. A directional filter according to claim 1, **characterised in that** the material of the lamellae (L) has an absorbent action and thus reduces the reflection of light.

3. A directional filter according to claim 1, **characterised in that** the lamellae (L) are made from highly reflective material, more particularly metallised paints or vapour-coated metal, which is applied to a smooth or polished bonding surface (G) of the support members (T).

4. A directional filter according to any one of the preceding claims, **characterised in that** the individual lamellae (L) have a different reflection and/or absorption property on each side and this is therefore suitable for guiding the light into a required direction.

5. A directional filter according to claims 4 and 5, **characterised in that** the directional filter is so designed that it can be turned by the user and the emerging light can thus be projected into the required direction.

6. A directional filter according to any one of the preceding claims, **characterised in that** the surfaces of the individual lamellae (L) are corrugated (Fig. 24) or angled (Fig. 23) and thus prevent lateral observation through the directional filter.

7. A directional filter according to any one of claims 1 to 6, **characterised in that** the U-shaped support members (T, Fig. 25) protect from environmental influences a light source enclosed by said members.

8. A directional filter according to claim 7, **characterised in that** the support members (T) which surround and protect the light source by their U-shaped configuration, are supplemented by a collar at the top end of the U-shape, said collar projecting into the U-opening so that the light source is further enclosed (Fig. 26).

9. A directional filter according to any one of the preceding claims, **characterised in that** the surfaces of the support members (T) are uniformly structured so that the diffuse light is given a characteristic with a lustre (Figs. 20 and 21).

10. A directional filter according to any one of the preceding claims, **characterised in that** thin films are used to form the lamellae (L).

11. A directional filter according to any one of the preceding claims, **characterised in that** the support members (T, Figs. 1, 6, 9, 21 and 25) are made of acrylic.

12. A directional filter according to any one of claims 1 to 10, **characterised in that** the support members (T, Figs. 1, 6, 9, 21 and 25) are made from glass.

13. A directional filter according to any one of claims 1 to 11, **characterised in that** the support members (T, Figs 1, 6, 9, 21 and 25) can be made by an injection moulding process.

14. A directional filter according to any one of the preceding claims, **characterised in that** absorbent or reflecting dyes which form the lamellae (L) on the support member (T) are added to the glue or adhesive used to connect the support members (T).

15. A directional filter according to any one of the preceding claims, **characterised in that** to form the lamellae (L) only the different refractive indices between the support member (T) and the air contained in a narrow slot are used (Figs. 5 and 8).

16. A method of making a directional filter according to any one of the preceding claims, **characterised in that** after they have been produced the bonding surface (G) of the support members (T), Fig. 6) is roughened or said members are made with a rough bonding surface (G) and the lamellae (L, Fig. 7) are then applied to said bonding surfaces (G) and said elements are then interconnected (Fig. 7).

17. A method according to claim 16, **characterised in that** the support members (T) are mechanically roughened after they have been made.

18. A method according to claim 16, **characterised in that** the support members (T) are chemically roughened after they have been made.

19. A method according to claim 16, **characterised in that** the mould for making the support member (T) is roughened and the support members (T) moulded therein therefore have a rough bonding surface (M).

20. A method for making a directional filter according to any one of claims 1 to 15, more particularly according to any one of claims 17 to 19, **characterised in that** the support members (T) are made by an extrusion process, are combined, connected and then cut to the appropriate width or length, perpendicularly to the plane of the lamellae.

21. Use of a directional filter according to any one of claims 1 to 15 to protect a light source from environmental influences.

## Revendications

1. Paralume comportant une série de lamelles (L) qui forment des puits, parallèles à rayons, ainsi que des corps supports transparents (T) qui remplissent les intervalles entre les lamelles (L), **caractérisé par le fait qu'**il est constitué de corps supports (T) en forme de U, les côtés extérieurs de ces corps supports (T) formant des surfaces d'émergence de lumière du paralume et les corps supports (T) coopérant avec les lamelles (L) situées entre eux de façon telle que la lumière qui, de la zone entourée par les corps supports (T), tombe sur ces derniers soit, en raison de l'indice de réfraction des corps supports (T), à l'entrée dans ceux-ci, réfractée vers la normale à la surface d'incidence et, aussi bien dans la zone de la base que dans la zone des ailes des corps supports en forme de U (T), soit, en traversant les corps supports (T), collimatée vers l'extérieur vers ladite surface d'émergence de lumière, et que les lamelles présentent sur chaque côté une couleur différente ou des couleurs différentes.

2. Paralume selon la revendication 1, **caractérisé par le fait que** la matière des lamelles (L) présente un effet absorbant et par là réduit la réflexion de la lumière.

3. Paralume selon la revendication 1, **caractérisé par le fait que** les lamelles (L) sont en matière à fort pouvoir réfléchissant, en particulier en peintures métallisées ou en métal qui est appliqué par évaporation sur une surface composite unie ou polie (G) des corps supports (T).

4. Paralume selon l'une des revendications précédentes, **caractérisé par le fait que** les lamelles (L) présentent sur chaque côté une propriété de réflexion et/ou d'absorption différente et celui-ci est par conséquent apte à diriger la lumière dans une direction désirée.

5. Paralume selon les revendications 4 et 5, **caractérisé par le fait qu'**il est construit de façon que l'utilisateur puisse le tourner et que la lumière émergente puisse ainsi être projetée dans la direction désirée.

6. Paralume selon l'une des revendications précédentes, **caractérisé par le fait que** les surfaces des lamelles (L) sont ondulées (fig. 24) ou coudées (fig. 23) et ainsi empêchent de voir latéralement à travers le paralume.

7. Paralume selon l'une des revendications 1 à 6, **caractérisé par le fait que** les corps supports en forme de U (T, fig. 25) protègent contre les influences de l'environnement une source lumineuse qu'ils entourent.

8. Paralume selon la revendication 7, **caractérisé par le fait que** les corps supports (T), qui, par leur forme en U, entourent et protègent la source lumineuse, sont complétés à l'extrémité supérieure du U par un collet qui entre dans l'ouverture du U, de sorte que la source lumineuse est encore plus entourée (fig. 26).

9. Paralume selon l'une des revendications précédentes, **caractérisé par le fait que** les surfaces des corps supports (T) sont structurées de manière régulière, ce qui donne à la lumière diffuse une caractéristique ayant un brillant (fig. 20 et 21).

10. Paralume selon l'une des revendications précédentes, **caractérisé par le fait que** pour la formation des lamelles (L) sont insérées des feuilles minces.

11. Paralume selon l'une des revendications précédentes, **caractérisé par le fait que** les corps supports (T, fig. 1, 6, 9, 21 et 25) sont en matière acrylique.

12. Paralume selon l'une des revendications 1 à 10, **caractérisé par le fait que** les corps supports (T, fig. 1, 6, 9, 21 et 25) sont en verre.

13. Paralume selon l'une des revendications 1 à 11, **caractérisé par le fait que** les corps supports (T, fig. 1, 6, 9, 21 et 25) peuvent être fabriqués par un procédé de moulage par injection.

14. Paralume selon l'une des revendications précédentes, **caractérisé par le fait que** des colorants absorbants ou réfléchissants qui forment les lamelles (L) sur le corps support (T) sont ajoutés à la colle utilisée pour l'union des corps supports (T).

15. Paralume selon l'une des revendications précédentes, **caractérisé par le fait que** pour la formation des lamelles (L) sont utilisés seulement les indices de réfraction différents entre le corps support (T) et l'air contenu dans une fente étroite (fig. 5 et 8).

16. Procédé de fabrication d'un paralume selon l'une des revendications précédentes, **caractérisé par le fait que** les corps supports (T, fig. 6) sont, après leur fabrication, rendus rugueux sur la surface composite (G) ou sont fabriqués avec une surface composite (G) rugueuse et les lamelles (L, fig. 7) sont ensuite appliquées sur les surfaces composites (G) et ces éléments sont après cela unis entre eux (fig. 7).

17. Procédé selon la revendication 16, **caractérisé par le fait que** les corps supports (T) sont, après leur fabrication, rendus rugueux par voie mécanique.

18. Procédé selon la revendication 16, **caractérisé par le fait que** les corps supports (T) sont, après leur fabrication, rendus rugueux par voie chimique.

19. Procédé selon la revendication 16, **caractérisé par le fait que** le moule pour la fabrication du corps support (T) est rendu rugueux et les corps supports (T) qui y sont coulés ont par conséquent une surface composite rugueuse.(M).

20. Procédé de fabrication d'un paralume selon l'une des revendications 1 à 15, en particulier selon l'une des revendications 17 à 19, **caractérisé par le fait que** les corps supports (T) sont fabriqués par moulage par injection, joints, assemblés et ensuite découpés à la largeur ou la longueur appropriée perpendiculairement au plan des lamelles.

21. Utilisation d'un paralume selon l'une des revendications 1 à 15 pour la protection d'une source lumineuse contre les influences de l'environnement.
